Europäisches Patentamt

European Patent Office

Office européen des brevets

(11) Veröffentlichungsnummer: **0 344 444**
**A2**

(12) # EUROPÄISCHE PATENTANMELDUNG

(21) Anmeldenummer: **89107006.2**

(22) Anmeldetag: **19.04.89**

(51) Int. Cl.⁴: **F25B 41/06 , B04B 15/02 , G05D 23/20**

(30) Priorität: **01.06.88 DE 3818584**

(43) Veröffentlichungstag der Anmeldung:
**06.12.89 Patentblatt 89/49**

(84) Benannte Vertragsstaaten:
**AT BE CH DE ES FR GB GR IT LI LU NL SE**

(71) Anmelder: **BERTHOLD HERMLE GMBH & CO.**
**Industriestrasse 8-12**
**D-7209 Gosheim(DE)**

(72) Erfinder: **Hermle, Harald**
**Griesweg 12**
**D-7201 Mahlstetten(DE)**
Erfinder: **Ulber, Hans Christoph**
**Sommerrainstrasse 54**
**D-7209 Wehingen(DE)**

(74) Vertreter: **Vetter, Hans, Dipl.-Phys. Dr. et al**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Kühlvorrichtung für eine Zentrifuge.**

(57) Es wird eine Kühlvorrichtung für eine Zentrifuge vorgeschlagen, die einen aus einem Verdampfer (10), einem Verdichter (11), einem Verflüssiger (12) und einem Expansionsventil (13) bestehenden Kühlkreislauf aufweist. Verdampferleitungen des Verdampfers (10) sind in oder an Wandungen (14) eines einen zu kühlenden Rotor aufnehmenden Rotorraums (15) angeordnet. Einer auf das Expansionsventil (13) einwirkenden Temperatur-Regelvorrichtung (17) wird ein Temperatur-Istwert von einem im Rotorraum (15) angeordneten ersten Temperatursensor (18) sowie ein Temperatur-Sollwert zugeführt. Die Temperatur-Regelvorrichtung (17) ist als Proportional-Regelvorrichtung und das Expansionsventil (13) als Proportional-Ventil ausgebildet, wobei eine bei Unterschreitung einer festlegbaren Temperaturdifferenz ($\Delta T_m$) im Verdampfer eine Öffnungsbewegung des Expansionsventils (13) verhindernde Steuereinheit (20,24) vorgesehen ist.

FIG. 1

## Kühlvorrichtung für eine Zentrifuge

Die Erfindung betrifft eine Kühlvorrichtung für eine Zentrifuge, mit einem aus einem Verdampfer, einem Verdichter, einem Verflüssiger und einem Expansionsventil bestehenden Kühlkreislauf, wobei Verdampferleitungen des Verdampfers in oder an Wandungen eines einen zu kühlenden Rotor aufnehmenden Rotorraumes angeordnet sind, und mit einer auf das Expansionsventil einwirkenden Temperatur-Regelvorrichtung, der ein Temperatur-Istwert von einem im Rotorraum angeordneten ersten Temperatursensor sowie ein Temperatur-Sollwert zugeführt wird.

Eine derartige Kühlvorrichtung für Zentrifugen ist aus der DE-0S 33 43 516 bekannt. Vor allem bei Zentrifugen, deren Rotor bei sehr hohen Drehzahlen betrieben wird, entsteht infolge der Luftreibung des Rotors eine nicht unerhebliche Reibungswärme, die abgeführt werden muß, insbesondere dann, wenn die zu zentrifugierende Substanz temperaturempfindliche Verbindungen enthält, was insbesondere bei medizinischen und biologischen Substanzen der Fall ist. Dabei hängt die erforderliche Kühlleistung wesentlich von der Drehzahl ab, das heißt, sie muß ständig an die jeweilige Drehzahl angepaßt werden. Weiterhin hängt die Kühlleistung von dem jeweils verwendeten Rotor von dessen Abmessungen ab, die den Abstand zu den mit dem Verdampfer versehenen Wandungen des Rotorraums vorgeben. Durch die im Rotorraum gemessene Temnperatur wird die eigentlich zu messende Temperatur im Rotor nur indirekt erfaßt, so daß Korrekturen in Abhängigkeit bekannter Einflußgrößen vorgesehen werden müssen.

Aus Gründen der Baugröße und des Wirkungsgrades ist es wünschenswert, die Kühlvorrichtung und insbesondere den Verdampfer möglichst bei maximaler Leistung zu betreiben, so daß in allen Betriebzuständen eine optimale Nutzung der Verdampferfläche erreicht wird. Die maximale Verdampferleistung wird dann erreicht, wenn die Differenz der Temperaturen am Verdampfereingang und -ausgang möglichst gering wird. Bei bekannten Verdampfern muß jedoch eine größere Temperaturdifferenz vorgegeben werden, um zu verhindern, daß flüssiges Kühlmittel den Verdampfer verläßt und zum Verdichter gelangt. Dies würde zu Betriebsstörungen und Defekten führen. Beispielsweise beträgt dabei bei einer Eingangstemperatur von -20° die Ausgangstemperatur -13°.

Eine Aufgabe der vorliegenden Erfindung besteht daher darin, eine Kühlvorrichtung der eingangs genannten Gattung zu schaffen, bei der eine optimalere Nutzung der Verdampferfläche erreicht wird und bei der geringere Temperaturdifferenzen zwischen der Eingangs- und Ausgangstemperatur des Verdampfers ermöglicht werden.

Diese Aufgabe wird erfindungsgemäß dadurch gelöst, daß die Temperatur-Regelvorrichtung als Proportional-Regelvorrichtung und das Expansionsventil als Proportional-Ventil ausgebildet ist und daß eine bei Unterschreitung einer festlegbaren Temperaturdifferenz im Verdampfer eine Öffnungsbewegung des Expansionsventils verhindernde Steuereinheit vorgesehen ist.

Durch die proportionale Durchflußregelung entsteht ein kontinuierlicher, jedoch veränderbarer Kühlmittelfuß durch den Verdampfer, der stetig an den aktuellen Bedarf angepaßt werden kann, so daß nur sehr geringe Temperaturschwankungen zu erwarten sind. Dabei kann die Verdampferleistung im Bereich des Maximums bei sehr geringen Temperaturdifferenzen gefahren werden, da bei Unterschreitung einer festlegbaren Temperaturdifferenz im Verdampfer als Sicherheitseinrichtung eine weitere Öffnungsbewegung des Expansionsventils verhindert wird. Durch die höher einstellbare Verdampferleistung kann der Verdampfer insgesamt kleiner dimensioniert werden, und der Wirkungsgrad erhöht sich im Vergleich zu bekannten Kühlvorrichtungen. Durch die geringe Temperaturdifferenz befindet sich in nahezu dem gesamten Verdampfer flüssiges Kühlmittel, das erst im Ausgangsbereich gasförmig wird. Die anfallende Wärme wird daher nahezu optimal abgeführt.

Durch die in den Unteransprüchen aufgeführten Maßnahmen sind vorteilhafte Weiterbildungen und Verbesserungen der im Anspruch 1 angegebenen Kühlvorrichtung möglich.

Bei Unterschreitung einer Minimal-Temperaturdifferenz kann durch die Steuereinheit nicht nur eine weitere Öffnungsbewegung des Expansionsventil verhindert, sondern zusätzlich noch eine Schließbewegung vorbestimmten Ausmaßes ausgelöst werden. Dadurch wird mit noch größerer Sicherheit verhindert, daß eine Minimal-Temperaturdifferenz nicht unterschritten wird. Dabei kann die Minimal-Temperaturdifferenz der festgelegten Temperaturdifferenz entsprechen, oder es kann stufenförmig zunächst eine weitere Öffnungsbewegung verhindert und erst bei einer noch kleineren Temperaturdifferenz eine Schließbewegung eingeleitet werden.

Zur Bestimmung der Temperaturdifferenz ist zweckmäßigerweise ein zweiter Temperatursensor im Verdampferzulauf, ein dritter Temperatursensor im Verdampferauslauf sowie ein Subtrahierglied vorgesehen. In diesem wird dann die Temperaturdifferenz $\Delta T$ gebildet und einer Schaltvorrichtung zugeführt, die bei Unterschreitung der festgelegten Temperaturdifferenz anspricht, wodurch die dem Expansionsventil gegebenenfalls zugeführten Öffnungssignale unterbrechbar sind. Falls eine Schließbewegung des Expansionsventils bei einer solchen Unterschreitung vorgesehen sein soll, so wird die Schaltvorrichtung als Umschaltvorrichtung ausgebildet, durch die im angesteuerten Zustand ein Schließsignal zur Erzielung einer vorbestimmten Schließbewegung von einer Signalstufe dem Expansionsventil zuführbar ist.

Alternativ zu einer derartigen Schaltvorrichtung kann auch bei Unterschreitung der festlegbaren Temperaturdifferenz im Verdampfer der Istwert oder der Sollwert der Temperatur-Regelvorrichtung mit einem in Richtung einer Schließbewegung des Expansionsventils wirkenden Signal beaufschlagt werden. Durch diesen Eingriff in das Regelsystem kann ebenfalls auf einfache Weise eine Unterschreitung der festlegbaren Temperaturdifferenz verhindert werden.

Zur zusätzlichen Sicherung ist im Bereich des Verdichters ein Druck- und/oder Temperatursensor am Kühlkreislauf angeordnet, vorzugsweise dem Verdichter in Strömungsrichtung gesehen nachgeschaltet, wobei eine bei Überschreitung eines vorgebbaren Grenzwerts das Expansionsventil zur Drosselung der Kühlleistung um ein vorbestimmtes Ausmaß schließende Steuervorrichtung vorgesehen ist. Damit wird verhindert, daß die Kühlvorrichtung nicht bei Erkennung einer solchen Störung abschaltet, sondern die Verdampferleistung so lange drosselt, bis die Verflüssiger-Grenzwerte wieder unterschritten werden. Damit wird ein Totalausfall der Kühlung verhindert. Diese Steuervorrichtung kann alternativ auf die Temperatur-Regelvorrichtung bzw. den Ist-oder Sollwert oder auf die Umschaltvorrichtung einwirken. Zusätzlich kann beim Ansprechen dieser Steuervorrichtung in vorteilhafter Weise eine Warneinrichtung und/oder die Wiedergabe von Service-Hinweisen, z. B. über einen Bildschirm, auslösen.

Zur Unterstützung einer optimalen Nutzung der Verdampferfläche bei minimaler Temperaturdifferenz sind zusätzlich noch die Verdampferleitungen auf der Verdampfer-Eingangsseite über einen Verteiler in parallel geführte und geschaltete Leitungen aufgespalten, die im Bereich größeren Kühlbedarfs angeordnet sind, wobei sich diesen parallelgeführten Leitungen zur Kühlung der Bereiche mit geringerem Kühlbedarf ab einer Vereinigungsstelle wenigstens eine individuell geführte Leitung anschließt. Hierdurch kann im Bereich größeren Kühlbedarfs ein besonders geringer Temperaturgradient realisiert werden, und es ist gewährleistet, daß dort bei der insgesamt geringen Temperaturdifferenz von beispielsweise 2° noch in jedem Falle die flüssige Phase des Kühlmittels vorliegt. Durch die anschließende individuell geführte Verdampferleitung können dann noch Bereiche mit geringerem Kühlbedarf gekühlt werden. Hierbei kann es sich auch um zwei parallelgeschaltete, jedoch unabhängig voneinander geführte Leitungen zu beiden Seiten der parallelgeführten Leitungen handeln, die ihrerseits wieder an der Verdampfer-Ausgangsseite zusammengeführt sind. Der Abstand der Leitungen voneinander wird zweckmäßigerweise in Abhängigkeit des jeweiligen Kühlbedarfs an der entsprechenden Stelle festgelegt, so daß insgesamt auf einfache Weise eine Anpassung an den Kühlbedarf und damit eine konstante Temperatur des Rotors erreicht werden kann. Die gasförmige Phase des Kühlmittels im Endbereich des Verdampfers hat dadurch nur noch einen geringen Einfluß auf die Verdampferleistung und die Temperaturverteilung.

Ausführungsbeispiele der Erfindung sind in der Zeichnung dargestellt und in der nachfolgenden Beschreibung näher erläutert. Es zeigen:

Fig. 1 eine schaltungsmäßige Darstellung eines ersten Ausführungsbeispiels der Kühlvorrichtung,

Fig. 2 ein zweites Ausführungsbeispiel in einer Ausschnittsdarstellung und

Fig. 3 die Anordnung von Verdampferleitungen an einer aufgerollten Wandung eines Rotorraums.

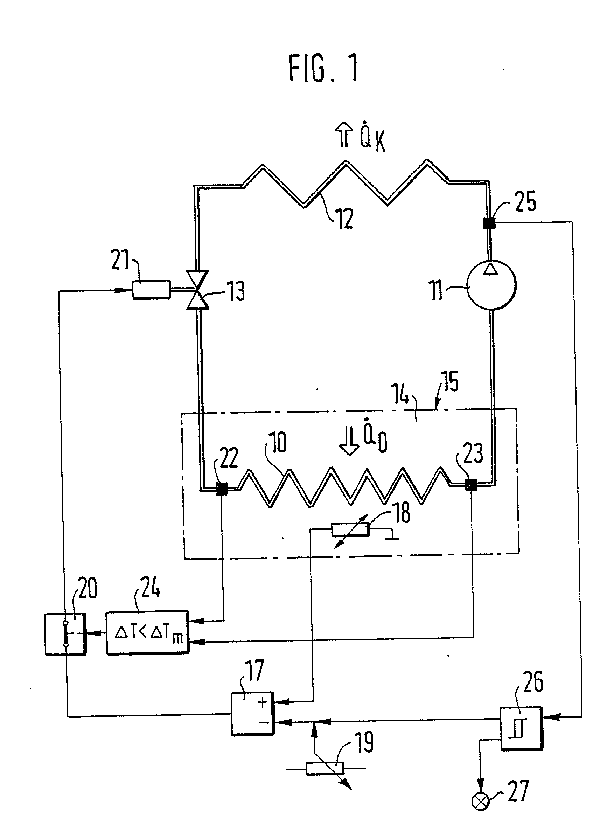

Gemäß der schematischen, schaltungsmäßigen Darstellung in Fig. 1 besteht ein Kühlkreislauf einer Kühlvorrichtung für eine Zentrifuge in bekannter Weise aus einem Verdampfer 10, einem Verdichter 11, einem Verflüssiger 12 und einem Expansionsventil 13. Die Verdampferleitungen des Verdampfers 10 sind in oder an Wandungen 14 eines Rotorraums 15 zur Aufnahme eines Rotors 16 der Zentrifuge angeordnet. Als Kühlmittel wird vorzugsweise Freon verwendet, das flüssig dem Verdampfer 10 zugeführt wird, aus diesem wieder gasförmig austritt, im Verdichter 11 verdichtet wird und im Verflüssiger 12 wieder in die flüssige Phase übergeführt wird. Durch das Expansionsventil 13 kann bei konstant laufendem Verdichter 11 der Durchfluß des Kühlmittels und damit die Kühlleistung eingestellt werden. Der Verdampfer 10 nimmt dabei die Wärmemeng $\dot{Q}$ auf, während der Verflüssiger 12 die Wärmemenge $\dot{Q}$ abgibt.

Einer Temperatur-Regelvorrichtung 17 wird als Istwert das Signal eines Temperatursensors 18 im Rotorraum 15 sowie als Sollwert das Signal eines Sollwertgebers 19 zugeführt. Anstelle des schematisch dargestellten Sollwertgebers 19 kann selbstverständlich auch ein entsprechendes Sollwert-Steuersignal eines Funktionsgenerators bzw. eines Mikrorechners treten. Das Ausgangssignal der Temperatur-Regelvorrichtung 17 wird über eine Schaltvorrichtung 20 einem Proportional-Stellglied 21 des als Proportional-Ventil ausgebildeten Expansionsventils 13 zugeführt. Das Proportional-Stellglied 21 kann beispielsweise als Schrittmotor oder Stellmagnet ausgebildet sein.

Ein zweiter Temperatursensor 22 ist am Verdampferzulauf und ein dritter Temperatursensor 23 am Verdampferauslauf angeordnet, deren Temperatursignale einem Subtrahierglied 24 zugeführt sind, das eine Schwellwertstufe beinhaltet. Der Ausgang dieses Subtrahierglieds 24 steuert die Schaltvorrichtung 20.

In Strömungsrichtung gesehen nach dem Verdichter 11 ist ein Druck- und/oder Temperatursensor 25 am Kühlkreislauf angeordnet, dessen Signal einer Schwellwertstufe 26 zugeführt ist. Deren Ausgangssignal wirkt zum einen auf den Sollwerteingang der Temperatur-Regelvorrichtung 17 ein und steuert zum anderen eine Warneinrichtung 27, die beispielsweise auch als Bildschirm zur Wiedergabe von Service-Hinweisen ausgebildet sein kann.

Durch die Temperatur-Regelvorrichtung 17 wird das Expansionsventil 13 in Abhängigkeit der Regeldifferenz mehr oder weniger geöffnet, um im Rotorraum eine dem Sollwert entsprechende Temperatur zu erhalten. Die Berücksichtigung der Differenz zwischen Rotorraumtemperatur und Rotortemperatur muß selbstverständlich ebenfalls in bekannter Weise vorgenommen werden. Zur optimalen Nutzung der Verdampferfläche wird diese so ausgelegt, daß immer ein relativ hoher Durchfluß von Kühlmittel erfolgt und daß die Temperaturdifferenz zwischen der Temperatur am Verdampferzulauf und der Temperatur am Verdampferauslauf sehr gering wird, so daß im überwiegenden Bereich des Verdampfers immer flüssiges Kühlmittel vorliegt. Um jedoch zu verhindern, daß diese Temperatur zu klein wird und flüssiges Kühlmittel zum Verdichter 11 gelangt, wird diese Temperaturdifferenz $\Delta T$ im Subtrahierglied 24 bestimmt, dem die Temperatursignale der beiden Temperatursensoren 22 und 23 zugeführt sind. Eine in diesem Subtrahierglied 24 enthaltene Schwellwertstufe erzeugt dann ein Ausgangssignal wenn die Temperaturdifferenz $\Delta T$ kleiner als eine vorgegebene Minimal-Temperaturdifferenz $\Delta T_m$ wird. Durch dieses Ausgangssignal wird die Schaltvorrichtung 20 geöffnet, so daß das Expansionsventil 13 nicht weiter geöffnet werden kann. Steigt die Temperaturdifferenz $\Delta T$ wieder über den Minimalwert $\Delta T_m$ an, so wird die Schaltvorrichtung 20 wieder geschlossen, und der gewöhnliche Regelvorgang wird fortgesetzt.

Zur zusätzlichen Sicherheit wird noch der Druck und/oder die Temperatur im Bereich des Verdichters 11 durch den Druck- und/oder Temperatursensor 25 überwacht. Steigt die Temperatur und/oder der Druck über einen durch die Schwellwertstufe 26 vorgebbaren Verflüssiger-Grenzwert an, so wird durch diese Schwellwertstufe 26 ein Steuersignal ausgelöst, durch das in den Regelkreis der Temperatur-Regelvorrichtung 17 eingegriffen wird. Der Eingriff erfolgt auf der Sollwertseite, kann jedoch prinzipiell durch ein inverses Signal auch auf der Istwertseite erfolgen. Der Sollwert wird dadurch um einen bestimmten Betrag herabgesetzt, so daß die Kühlleistung gedrosselt wird, bis die Verflüssiger-Grenzwerte wieder unterschritten werden. Selbstverständlich ist von der Schwellwertstufe 26 aus auch ein direkter Eingriff auf das Proportional-Stellglied 21 im Sinne einer Drosselung der Kühlleistung möglich.

Gleichzeitig wird durch den Ausgang der Schwellwertstufe 26 eine Warneinrichtung 27 betätigt, die als optische oder akustische Warneinrichtung ausgebildet ist und anzeigt, daß der Kühlkreislauf wegen Überschreitung der Verflüssiger-Grenzwerte gedrosselt ist. Gleichzeitig können auch entsprechende Service-Hinweise, z. B. über einen Bildschirm, angezeigt werden, durch die der Benutzer Informationen über die Ursache der Überschreitung der Verflüssiger-Grenzwerte bekommt, beispielsweise können diese lauten: "Verflüssiger reinigen", "Wandabstand zu gering" usw.

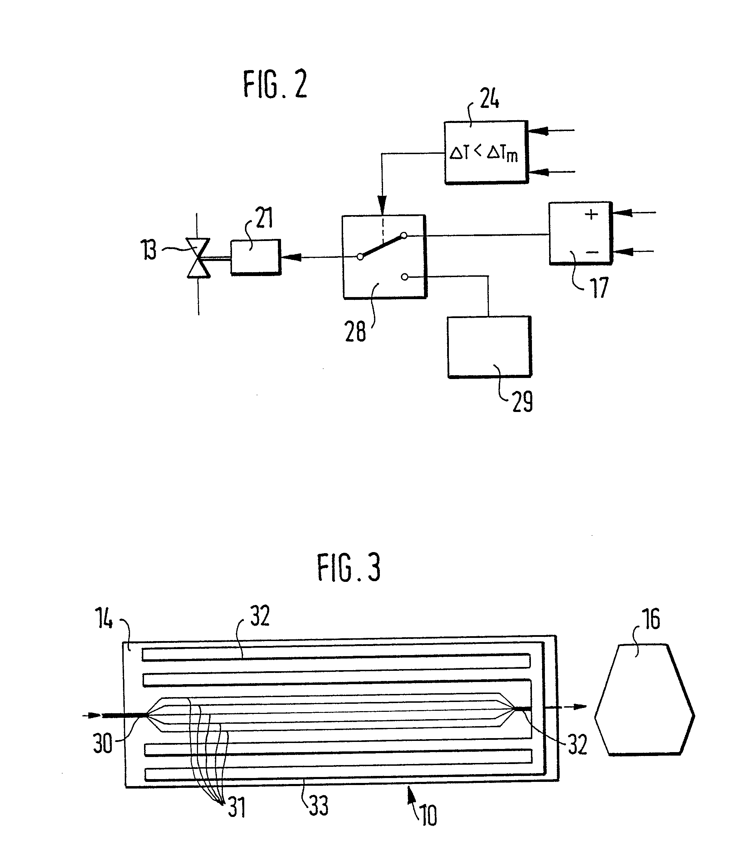

Das in Fig. 2 ausschnittsweise dargestellte zweite Ausführungsbeispiel entspricht weitgehend dem in Fig. 1 dargestellten ersten Ausführungsbeispiel wobei dieselben Baugruppen mit denselben Bezugszeichen versehen sind.

Anstelle der Schaltvorrichtung 20 tritt nunmehr eine Umschaltvorrichtung 28, deren erster Umschaltkontakt mit dem Ausgang der Temperatur-Regelvorrichtung 17 und deren zweiter Umschaltkontakt mit einer Signalstufe 29 verbunden ist. Wird die vorgegebene Temperaturdifferenz $\Delta T_m$ unterschritten, so wird durch Umschaltung der normale Regelvorgang unterbrochen und das Proportional-Stellglied 21 von der Signalstufe 29 gesteuert. Diese erzeugt ein Signal oder eine Signalfolge, durch die das Expansionsventil 13 um einen vorbestimmten Betrag oder um ein vorbestimmtes Verhältnis zugesteuert wird. Dadurch wird die Kühlleistung reduziert, und die Temperaturdifferenz $\Delta T$ steigt wieder an. Wenn sie den Grenzwert $\Delta T_m$ überschreitet, so erfolgt eine Rückschaltung der Umschaltvorrichtung 28 auf den normalen Regelvorgang.

Alternativ zu den in den Fig. 1 und 2 dargestellten Ausführungsbeispielen kann das Ausgangssignal des Subtrahierglieds 24 bzw. der in ihm enthaltenen Schwellwertstufe auch direkt in den Regelvorgang eingreifen, wie dies die Schwellwertstufe 26 gemäß Fig. 1 tut. Durch Addition des Ausgangssignals des Subtrahierglieds 24 zum Sollwertsignal bzw. Subtraktion vom Istwertsignal erfolgt ebenfalls eine bestimmte Schließbewegung des Expansionsventils 13, wie dies erwünscht ist.

In Fig. 3 ist die Abwicklung der Wandung 14 des Rotorraums 15 dargestellt, die den Rotor 16 umgibt. Zur Kühlung dieses Rotors 16 ist der Verdampfer 10 - wie bereits beschrieben - an dieser Wandung angeordnet oder in ihr enthalten.

Eingangsseitig des Verdampfers 10 ist ein Venturi-Verteiler 30 angeordnet, über den eine Verzweigung in fünf parallelgeführte und -geschaltete Leitungen 31 erfolgt. Anstelle eines Venturi-Verteilers 30 kann prinzipiell auch ein anderer entsprechender Verteiler treten, und es kann eine andere Anzahl von parallelen Leitungen 31 vorgesehen sein. Diese fünf parallelen Leitungen sind einmal um den Rotorraum 15 herumgeführt, und zwar in einem Bereich, in dem die größte Kühlleistung erforderlich ist, das heißt in dem Bereich, in dem der Rotor 16 den größten Radius und damit die höchste Geschwindigkeit aufweist. Nach dieser Windung sind die fünf Leitungen 31 wieder zusammengeführt und verzweigen sich ab dieser Vereinigungsstelle 32 in zwei parallelgeschaltete, jedoch indivuell geführte Leitungen 33, 34, die oberhalb bzw. unterhalb der fünf parallelen Leitungen 31 angeordnet sind. An der Verdampfer-Ausgangsseite sind diese beiden Leitungen 33, 34 wieder zusammengeführt. Durch diese Anordnung wird zum einen erreicht, daß im Bereich großer Kühlleistung nur ein kleiner Temperaturgradient infolge der fünf parallel nebeneinander geführten Leitungen 31 vorliegt, so daß zumindest in diesem Bereich bei dem durch die vorstehend beschriebene Vorrichtung insgesamt sehr geringen Temperaturgradienten auf jeden Fall die flüssige Phase in jedem Betriebszustand vorliegt. Dadurch trägt auch die Anordnung dazu bei, die Verdampferleistung möglichst groß zu machen. Die Leitungen 32, 33 dienen zur Kühlung der Bereiche, in denen eine geringere Kühlleistung erforderlich ist, wobei die Abstände der Leitungsführung ein entsprechendes Kühlprofil realisieren können. Dies trifft selbstverständlich auch für die Leitungen 31 zu.

Sollte sich der Bereich mit größerem Kühlbedarf im oberen oder unteren Randbereich der Wandung 14 befinden, so ist eine Verzweigung nach der Vereinigungsstelle 32 der Leitungen 31 nicht mehr erforderlich, und nur noch eine einzige Leitung erstreckt sich dann von diesem Punkt aus nach unten bzw. nach oben.

**Ansprüche**

1. Kühlvorrichtung für eine Zentrifuge, mit einem aus einem Verdampfer, einem Verdichter, einem Verflüssiger und einem Expansionsventil bestehenden Kühlkreislauf, wobei Verdampferleitungen des Verdampfers in oder an Wandungen eines einen zu kühlenden Rotor aufnehmenden Rotorraumes angeordnet sind, und mit einer auf das Expansionsventil einwirkenden Temperatur-Regelvorrichtung, der ein Temperatur-Istwert von einem im Rotorraum angeordneten ersten Temperatursensor sowie ein Temperatur-Sollwert zugeführt wird, dadurch gekennzeichnet, daß die Temperatur-Regelvorrichtung 17) als Proportional-Regelvorrichtung und das Expansionsventil (13) als Proportional-Ventil ausgebildet ist, und daß eine bei Unterschreitung einer festlegbaren Temperaturdifferenz ($\Delta T_m$) im Verdampfer (10) eine Öffnungsbewegung des Expansionsventils (13) verhindernde Steuereinheit (24, 20; 24, 28, 29) vorgesehen ist.

2. Kühlvorrichtung nach Anspruch 1, dadurch gekennzeichnet, daß bei Unterschreitung einer Minimal-Temperaturdifferenz ($\Delta T_m$) durch die Steuereinheit (24, 28, 29) eine Schließbewegung vorbestimmten Ausmaßes des Expansionsventils (13) auslösbar ist.

3. Kühlvorrichtung nach Anspruch 2, dadurch gekennzeichnet, daß die Minimal-Temperaturdifferenz der festlegbaren Temperaturdifferenz ($\Delta T_m$) entspricht.

4. Kühlvorrichtung nach einem der vorhergehenden Ansprüche, dadurch gekennzeichnet, daß zur Bestimmung der Temperaturdifferenz ($\Delta T$) ein zweiter Temperatursensor (22) am Verdampferzulauf, ein dritter Temperatursensor (23) am Verdampferauslauf sowie ein Subtrahierglied (24) vorgesehen sind.

5. Kühlvorrichtung nach einem der vorhergehenden Ansprüche, dadurch gekennzeichnet, daß ein Proportional-Stellglied (21) des Expansionsventils (13) als Schrittmotor oder Stellmagnet ausgebildet ist.

6. Kühlvorrichtung nach einem der vorhergehenden Ansprüche, dadurch gekennzeichnet, daß eine bei Unterschreitung der festlegbaren Temperaturdifferenz ($\Delta T_m$) ansprechende Schaltvorrichtung (20, 28) vorgesehen ist, durch die dem Expansionsventil (13) zugeführte Öffnungssignale unterbrechbar sind.

7. Kühlvorrichtung nach Anspruch 6, dadurch gekennzeichnet, daß die Schaltvorrichtung (28) als Umschaltvorrichtung ausgebildet ist, durch die im angesteuerten Zustand ein Schließsignal zur Erzielung einer vorbestimmten Schließbewegung von einer Signalstufe (29) dem Expansionsventil (13) zuführbar ist.

8. Kühlvorrichtung nach einem der Ansprüche 1 bis 5, dadurch gekennzeichnet, daß bei Unterschreitung der festlegbaren Temperaturdifferenz ($\Delta T_m$) im Verdampfer (10) der Istwert oder der Sollwert der Temperatur-Regelvorrichtung (17) mit einem in Richtung einer Schließbewegung des Expansionsventils (13) wirkenden Signal beaufschlagt wird.

9. Kühlvorrichtung nach einem der vorhergehenden Ansprüche, dadurch gekennzeichnet, daß im Bereich des Verdichters (11) ein Druck- und/oder Temperatursensor (25) am Kühlkreislauf angeordnet ist und daß eine bei Überschreitung eines vorgebbaren Grenzwerts das Expansionsventil (13) zur Drosselung der Kühlleistung um ein vorbestimmtes Ausmaß schließende Steuervorrichtung (26) vorgesehen ist.

10. Kühlvorrichtung nach Anspruch 9, dadurch gekennzeichnet, daß der Druck- und/oder Temperatursensor (25) dem Verdichter (11) in Strömungsrichtung gesehen nachgeschaltet ist.

11. Kühlvorrichtung nach Anspruch 9 oder 9, dadurch gekennzeichnet, daß die Steuervorrichtung (26) auf die Temperatur-Regelvorrichtung (17) oder die Umschaltvorrichtung (28) einwirkt.

12. Kühlvorrichtung nach einem der Ansprüche 9 bis 11, dadurch gekennzeichnet, daß zusätzlich eine Warneinrichtung und/oder die Wiedergabe von Service-Hinweisen durch die Steuervorrichtung (26) auslösbar ist.

13. Kühlvorrichtung nach einem der vorhergehenden Ansprüche, dadurch gekennzeichnet, daß die Verdampferleitungen (31 - 33) auf der Verdampfer-Eingangsseite über einen Verteiler (30) in parallelgeführte und -geschaltete Leitungen (31) aufgespalten sind, die im Bereich größeren Kühlbedarfs angeordnet sind, und daß sich diesen parallelgeführten Leitungen (31) zur Kühlung der Bereiche mit geringerem Kühlbedarf ab einer Vereinigungsstelle (32) wenigstens eine individuell geführte Leitung (32, 33) anschließt.

14. Kühlvorrichtung nach Anspruch 13, dadurch gekennzeichnet, daß ab der Vereinigungsstelle (32) zwei parallelgeschaltete, jedoch unabhängig voneinander geführte Leitungen (32, 33) zu beiden Seiten der parallelgeführten Leitungen (31) angeordnet und an der Verdampfer-Ausgangsseite wieder zusammengeführt sind.

15. Kühlvorrichtung nach Anspruch 13 oder 14, dadurch gekennzeichnet, daß der Abstand der Leitungen (31-33) voneinander in Abhängigkeit des jeweiligen Kühlbedarfs an der entsprechenden Stelle festgelegt ist.

16. Kühlvorrichtung nach einem der Ansprüche 13 bis 15, dadurch gekennzeichnet, daß der Verteiler (30) als Venturi -Verteiler ausgebildet ist.

# FIG. 1

$\Uparrow \dot{Q}_K$

12

25

21

13

11

15

14

$\Downarrow \dot{Q}_0$

22

10

23

18

20

24

$\Delta T < \Delta T_m$

17

+

19

26

27

FIG. 2

FIG. 3